**Europäisches Patentamt**

**European Patent Office**

**Office européen des brevets**

(11) Veröffentlichungsnummer : **0 320 666 B1**

(12) **EUROPÄISCHE PATENTSCHRIFT**

(45) Veröffentlichungstag der Patentschrift :
**12.02.92 Patentblatt 92/07**

(51) Int. Cl.$^5$ : **B60T 17/22**, G01L 5/28

(21) Anmeldenummer : **88119446.8**

(22) Anmeldetag : **23.11.88**

---

(54) **Tragbares Prüfgerät für Fusspedal-Betätigungen, insbesondere für hydraulisch betätigte Kraftfahrzeugbremsen.**

---

(30) Priorität : **15.12.87 DE 3742454**

(43) Veröffentlichungstag der Anmeldung :
**21.06.89 Patentblatt 89/25**

(45) Bekanntmachung des Hinweises auf die Patenterteilung :
**12.02.92 Patentblatt 92/07**

(84) Benannte Vertragsstaaten :
**DE FR GB IT**

(56) Entgegenhaltungen :
DE-A- 2 333 421
DE-U- 1 795 447

(56) Entgegenhaltungen :
DE-U- 8 716 534
US-A- 1 615 798
US-A- 2 932 504
US-A- 4 206 636

(73) Patentinhaber : **Bayerische Motoren Werke Aktiengesellschaft**
**Patentabteilung AJ-30 Postfach 40 02 40**
**Petuelring 130**
**W-8000 München 40 (DE)**

(72) Erfinder : **Mörlein, Karlheinz**
**Hans-Ohorn-Platz 25**
**W-8453 Vilseck 2 (DE)**
Erfinder : **Unterforsthuber, Jakob**
**Ballaufstrasse 3**
**W-8000 München 83 (DE)**

EP 0 320 666 B1

## Beschreibung

Tragbares Prüfgerät für Fußpedal-Betätigungen, insbesondere für hydraulish betätigte Kraftfahrzeug-Bremsen.

Die Erfindung bezieht sich auf ein Prüfgerät einer Bauart gemäß den Oberbegriffs-Merkmalen des Anspruches 1. Ein bekanntes Prüfgerät dieser Bauart nach DE-C- 29 28 153 und US-A- 4186595 weist einen hohen Bauaufwand und ein hohes Gewicht auf, da es zur Betätigung des Fußpedals einen Zylinder-Kolben-Stellmotor und zur Abstützung der Betätigungskraft ein entsprechend stabil ausgebildetes Gehäuse mit Halterung umfaßt. Die vorgesehene Anwendung zum Prüfen von Kraftfahrzeugbremsen bezüglich Funktionssicherheit der meist mechanischhydraulischen Betätigungsübertragungen an Automobilfertigungsstraßen wird dadurch erschwert und deren Anwendung in kleineren Wartungsbetrieben durch erforderliche Leitungsverbindungen mit einer stationären Kraftquelle weitgehend ausgeschlossen.

Ferner sind - beispielsweise durch die DE-B- 2250728 - Pedalkraft-Meßvorrichtungen bekannt, die ein handliches Gehäuse mit Trittplatte für die Fußbetätigung durch eine Prüfperson aufweisen und zur Anordnung zwischen der Pedalplatte des Fußpedals und der Schuhsohle Befestigungsvorrichtungen umfassen, wie Schuh-Halteschlaufen oder Pedal-Haltezwingen. Ein Prüfvorgang mit Zuordnung von Pedalkraft zu Pedalweg zum Prüfen der Betätigungseinstellung und insbesondere des Hydraulikkreis-Entlüf tungsgrades kann damit nicht zuverlässig wiederholbar durchgeführt werden.

Der Erfindung liegt die Aufgabe zugrunde, ein tragbares Prüfgerät zu schaffen, das leicht gebaut und einfach handhabbar ist sowie einen genauen und schnellen, zuverlässig wiederholbaren Prüfvorgang ermöglicht.

Diese Aufgabe löst die Erfindung mittels der Kennzeichenmerkmale des Anspruches 1. Durch die Kombination einer fußbetätigten Pedalkraft-Meßvorrichtung mit einer auf einen Festpunkt bezogenen Pedalweg-Meßvorrichtung ergibt sich ein überraschend einfacher leichter Aufbau des Prüfgerätes und ein einfacher, zeitlich kurzer Prüfvorgang wird dadurch ermöglicht. Das schlank ausführbare stabförmige Bauteil der Pedalweg-Meßvorrichtung wird dabei lediglich am Fußpedal befestigt und an einem Festpunkt lose abgestützt. Die Pedalkraft wird sodann durch eine Prüfperson über die an dessen Schuh oder an der Pedalplatte befestigte Pedalkraft-Meßvorrichtung aufgebracht und zu einem vorbestimmten Pedalkraftwert der Pedalwegwert als Prüfwert abgelesen und/oder in anderer üblicher Weise ausgewertet, wobei den Sollwertbereich überschreitende Abweichungen einfach feststellbar sind.

Die Ansprüche 2 bis 12 enthalten Weiterbildungen der Erfindung, die von einem besonders einfachen und kostengünstigen Aufbau des Prüfgerätes für den Werkstättenbedarf bis zu einer mit einer Datenverarbeitung zusammenwirkenden Ausbildung für die Anwendung an Fertigungsstraßen reichen und dennoch den prinzipiellen leicht handhabbaren Grundaufbau des Prüfgerätes nutzen.

Die Ausbildung nach Anspruch 2 umfaßt für eine äußerst kostengünstige, werkstatt-geeignete Ausbildung des Prüfgerätes vor allem für Kraftfahrzeug-Bremsen einen einfachen Meßstab mit gelenkiger Halterung zum Fußpedal an einem Ende und mit einem Längenmaßstab an seinem anderen Endbereich, der mit einer vorhandenen Kante oder einer, z. B. durch Ankleben zu befestigenden, Meßmarke am Lenkrad zusammenwirkt. Durch die Kombination mit einer handelsüblichen, vorstehend beschriebenen Pedalkraft-Meßvorrichtung ist ein besonders einfacher und dennoch zuverlässig wiederholbarer Prüfvorgang durchführbar.

Die Merkmale der Ansprüche 3 und 4 ermöglichen eine einfache Anpassung der Pedalweg-Meßvorrichtung an die abweichenden Abstände zwischen Fußpedal und Lenkradkranz einzelner Kraftfahrzeuge und auch Kraftfahrzeug-Baumuster sowie eine Nullstellung des Längenmaßstabes für einen besonders einfachen Sollwert-Istwert-Vergleich.

Die Merkmale des Anspruches 5 enthalten eine Ausbildung des Prüfgerätes mit an unterschiedlichen Lenkradkranz-Abmessungen abstützbarem freien Ende der Pedalweg-Meßvorrichtung, die den Längenmaßstab und die zugehörigen Meßmarken in sich aufweist und damit von einem Ablesen in Bezug auf einen Festpunkt außerhalb des Prüfgerätes unabhängig ist.

Die Weiterbildungen nach den Ansprüchen 6 bis 9 ermöglichen sowohl ein vorteilhaftes direktes Ablesen der Prüf-Zahlenwerte als auch eine Auswertung der Meßwerte in handelsüblichen Prüf- und Auswertgeräten.

Nach den Merkmalen des Anspruches 10 sind die Pedalkraft- und Pedalweg-Meßvorrichtungen zu einer besonders günstig handhabbaren Baueinheit zusammengefaßt. Die Merkmale der Ansprüche 11 und 12 enthalten eine vorteilhafte Ausbildung der Längen- und Maßstab-Einstellbarkeit des Prüfgerätes.

In der Zeichnung sind Ausführungsbeispiele der Erfindung dargestellt. Es zeigen:

Fig. 1 ein tragbares Prüfgerät für eine mittels Fußpedal betätigte Kraftfahrzeug-Bremse in schematisch dargestellter Prüfanordnung zwischen Brems-Fußpedal und Lenkradkranz,

Fig. 2 eine Draufsicht auf die Bremspedalplatte mit Pedalkraft-Meßvorrichtung mit Prüfperson-Schuh gemäß Fig. 1,

Fig. 3 eine Teilansicht gemäß Linie III-III des Lenkradkranzes mit anliegendem Prüfgerät-Teilabschnitt,

Fig. 4 eine abgewandelte Ausbildung des Prüfgerätes nach Fig. 1, bei der am Lenkradkranz eine zusätzliche Abstützung des Prüfgerätes in dessen Längsrichtung vorgesehen ist,

Fig. 5 eine Teilansicht der Ausbildung nach Fig. 4 mit einer gabelförmigen Abstützung am Lenkradkranz und

Fig. 6 eine weitere abgewandelte Ausbildung des Prüfgerätes nach Fig. 1 mit doppelt teleskopischer Längen-Verstell- und -Einstellbarkeit, digitalen Pedalkraft- und Pedalweg-Meßvorrichtungen und mit diesen leitungsverbundenen Anzeige- und Auswertgeräten.

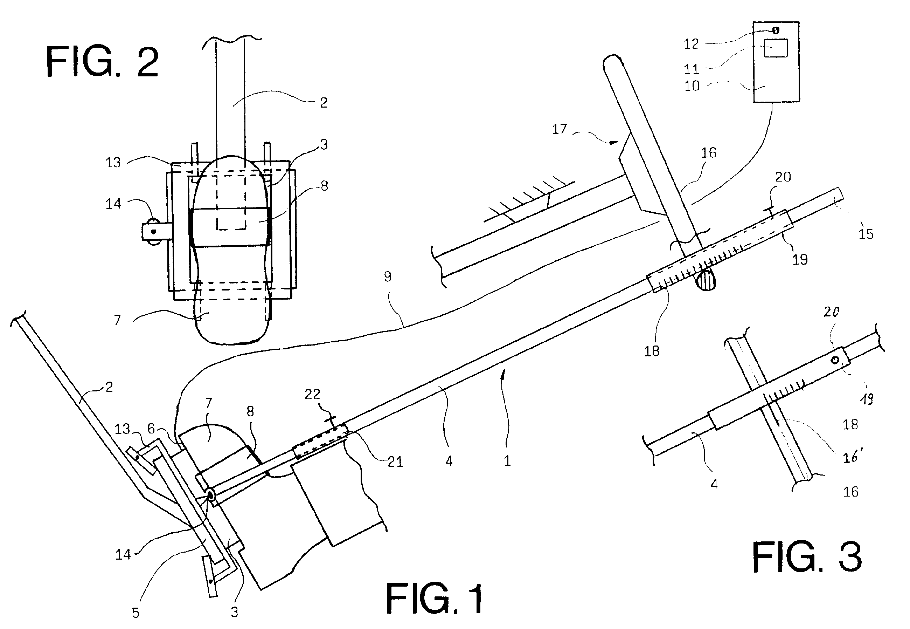

Ein tragbares Prüfgerät 1 für hydraulisch über ein Bremsfußpedal 2 zu betätigende Bremsen von Kraftfahrzeugen besteht gemäß den Fig. 1 bis 3 im wesentlichen aus einer gehäuseförmigen Pedalkraft-Meßvorrichtung 3 und einer stabförmigen Pedalweg-Meßvorrichtung 4. Die Pedalkraft-Meßvorrichtung 3 ist zwischen der Pedalplatte 5 des Fußpedals 2 und der Schuhsohle 6 des Schuhes 7 einer nicht dargestellten, auf dem Fahrersitz des Kraftfahrzeuges während des Prüfvorganges sitzenden Prüf-Person angeordnet und entweder auf der Pedalplatte 5 oder mittels einer Haltebandschlaufe 8 am Schuh 7 befestigt. Über eine Leitung 9 ist an der Pedalkraft-Meßvorrichtung ein zugehöriges Anzeigeinstrument 10 mit Digital-Display 11 und Null-Stelltaste 12 angeschlossen, das in der Hand der Prüfperson gehalten und bedient werden kann.

Mittels einer leicht lösbaren Halterung 13 und eines an dieser befestigten Gelenkes 14 ist ein Ende der Pedalweg-Meßvorrichtung 4 am Fußpedal 2 bzw. an dessen Pedalplatte 5 angelenkt. Das andere freie Ende 15 der Vorrichtung 4 ist glatt längs-gleitfähig gestaltet und liegt an der Innenseite des Lenkradkranzes 16 einer Fahrzeug-Lenkvorrichtung 17 unter der Wirkung seines Eigengewichtes lose an. Im Bereich dieses freien Endes 15 der Vorrichtung 4 ist auf dessen Oberfläche ein Längenmaßstab 18 aufgebracht, der mit einer Kante des Lenkradkranzes 16 oder einer auf diesem befestigten Meßmarke 19, z. B. ein Klebebandstück mit Markierungsstrich, als Pedalweg-Meßmaßstab zusammenwirkt. Für eine Nullstell-Möglichkeit der Meßmarke kann der Längenmaßstab 18 zusätzlich auf einer längsverstellbaren Einstellhülse 19 mit Feststellschraube 20 angeordnet sein.

Eine Nullstell-Möglichkeit sowie eine Längenanpassung der gesamten Pedalweg-Meßvorrichtung 4 an unterschiedliche Abstände zwischen Pedalplatte 5 und Lenkradkranz 16 ist durch eine teleskopische Ausbildung 21 mit Feststellschraube 22 gegeben.

Für den Prüfvorgang wird das leicht handhabbare Prüfgerät 1 mit seinem freien Ende 15 der Pedalweg-Meßvorrichtung 4 in den Lenkradkranz 16 eingeführt und anschließend dessen Halterung 13 an der Pedalplatte 5 befestigt. Die Prüfperson setzt sich sodann auf den Fahrersitz, drückt bis zu einer vorbestimmten Betätigungskraft mit seiner Schuhsohle 6 auf die zur Pedalplatte 5 zwischengeschaltete Pedalkraft-Meßvorrichtung 3. Dabei beobachtet die Prüfperson den Kraftwert am Anzeigeinstrument 10 und liest beim Erreichen eines vorbestimmten Kraftwertes den zugehörigen Wegwert am Längenmaßstab 18 ab.

Durch Vergleich des abgelesenen Ist-Wegwertes mit einem vorgegebenen Soll-Wegwert kann sodann das Ergebnis des Prüfvorganges einfach beurteilt werden. Der Abbau des Prüfgerätes 1 erfolgt in umgekehrter, gleich einfacher Arbeitsweise wie dessen Aufbau.

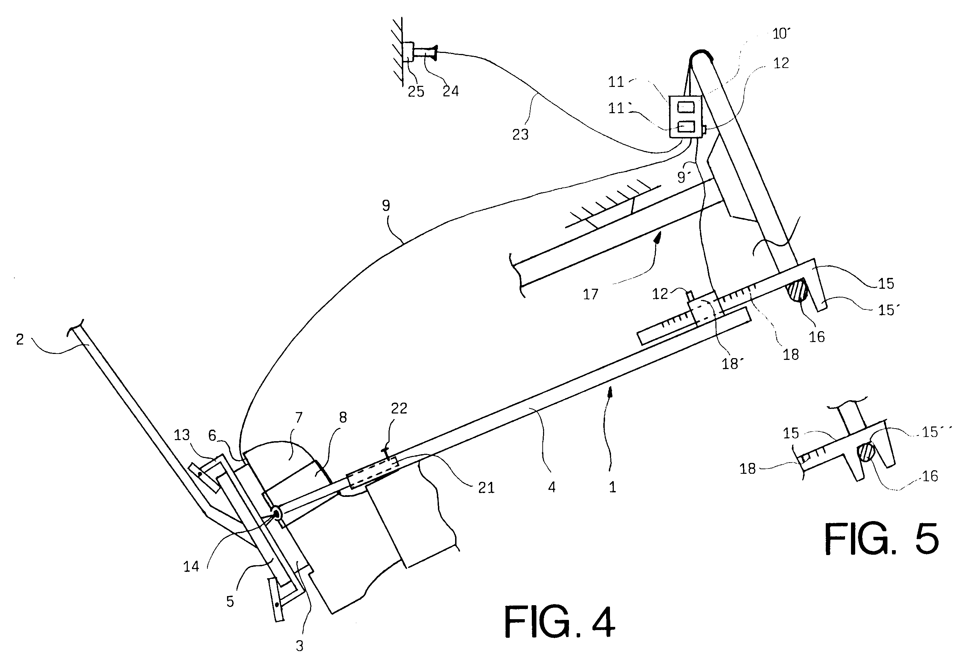

Bei der alternativen Ausbildung des Prüfgerätes 1 nach den Fig. 4 und 5 ist im wesentlichen nur der Längenmaßstab 18 abweichend von Fig. 1 ausgebildet und das freie Ende 15 zusätzlich in Längsrichtung am Lenkradkranz 16 abgestützt. Ferner ist das Anzeigeinstrument 10′ zur weiter erleichterten Handhabung am oberen Bereich des Lenkradkranzes 16 und somit im günstigen Sichtbereich der Prüfperson mittels eines Haltehakens eingehängt sowie zusätzlich mit einem weiteren Digital-Display 11′ ausgestattet, das von einem elektronischen Digital-Wegaufnehmer 18′ entsprechend einem Längenmaß stab 18 über eine weitere Leitung 9′ angesteuert wird. Die Ausbildung des Prüfgerätes 1 im Bereich des Fußpedals 2 stimmt mit derjenigen nach Fig. 1 bis 3 überein.

In Fig. 4 liegt das freie Ende 15 der Pedalweg-Meßvorrichtung 4 von der dem Fahrersitz zugewandten Stirnseite zusätzlich mittels einer rechtwinkeligen Anschlagkante 15′ am Lenkradkranz 16 an. In Ruhelage des Fußpedals kann mittels einer längsbeweglichen Verbindung des freien Endes 15 mit dem Hauptbereich der Meßvorrichtung 4 dieses Anlegen und zugleich eine Nullstellung des Längenmaßstabes 18 bzw. mittels der Nullstelltaste 12 des Digital-Displays 11′ des elektronischen Wegaufnehmers 18′ vorgenommen werden.

Durch die gabelförmige und sich keilförmig erweiternde Aufnahme 15″ am freien Ende 15 und durch deren Längsverschiebbarkeit nach Fig. 4 und 5 ergibt sich - unabhängig von der Abmessung des Lenkradkranzes 16 und dessen Abstand zum Fußpedal 2 - beim Verbinden der Pedalweg-Meßvorrichtung 4 mit dem Lenkradkranz 16 unmittelbar die Nullstellung der Pedalweg-Meßvorrichtung 4 zu dem jeweiligen fahrzeugbedingten Abstand der Abstützstellen am Fußpedal 2 und am Lenkradkranz 16.

Wird statt einer einfachen Maßstabskala 18 ein handelsüblicher elektronischer Digital-Wegmeßaufnehmer 18′ mit einer Impulsgeber-Schiene 18 verwendet, so ist zur Messungs-Nullstellung ausschließlich eine zugehörige Null-Stelltaste 12 am Wegmeßaufnehmer 18′ und/oder an einem damit über eine Leitung 9′ verbundenen Anzeigeinstrument 10′ zu betätigen. Das Anzeigeinstrument 10′ enthält neben dem Pedalweg-Digital-Display 11′ auch ein über die Leitung 9 angesteuertes Pedalkraft-Digital-Display 11 entsprechend Fig. 1, so daß die Prüfperson den bei einem bestimmten Pedalkraftwert jeweils erreichten Pedalwegwert unmittelbar erkennen und ablesen kann. Dieser Prüfvorgang läßt sich zusätzlich durch Anschluß des Anzeigeinstrumentes 10′ an das Fahrzeug-Bordnetz mittels einer Anschlußleitung 23 und eines Anschlußsteckers 24 zu einem regelmäßig in Fahrzeugen installierten Zigarrenanzünder 25 vereinfachen, wobei auch eine sonst erforderliche Anschlußleitung zu einem Gebäudestromnetz bzw. eine Batterie ausreichender Größe am Prüfgerät entfällt.

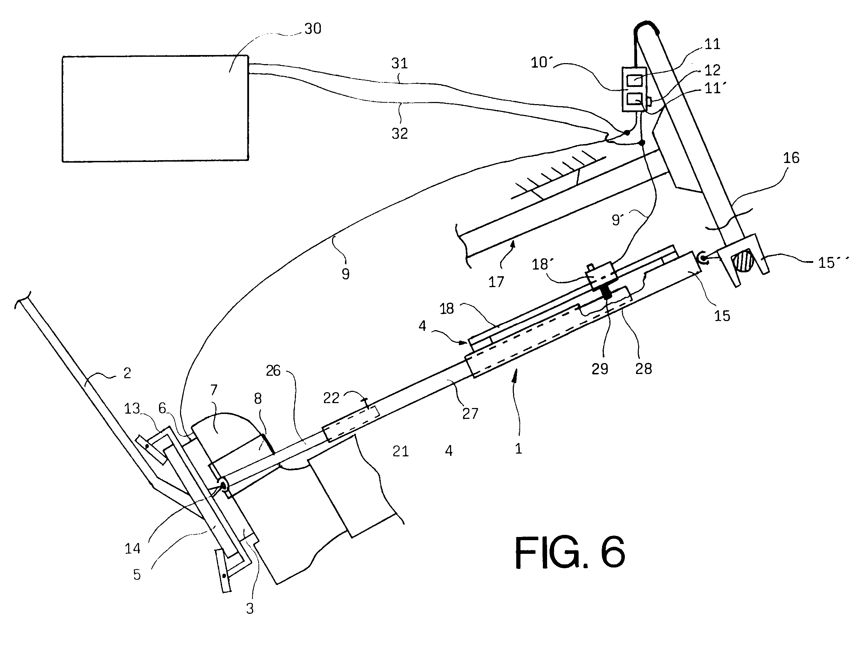

Bei der Ausbildung nach Fig. 6 ist abweichend zu den Fig. 4 und 5 die Pedalweg-Meßvorrichtung 4 aus drei doppelt-teleskopisch ineinander längs-verschiebbaren Rohren 26, 27 und 28 zusammengesetzt. Ein handelsüblicher elektronischer Digital-Wegmeßaufnehmer 18′ ist dabei den dem Lenkradkranz 16 benachbarten beiden mittleren und äußeren Rohren 27 und 28 zugeordnet. Die digitale Impulsgeber-Schiene 18 des Wegmeßaufnehmers 18′ ist am äußeren Rohr 28 starr befestigt. Das auf der Impulsgeber-Schiene 18 verschiebbar befestigte Gehäuse des Wegmeßaufnehmers 18′ ist über einen Mitnahme-Bolzen 29 mit dem mittleren Rohr 27 durch einen Längsschlitz des äußeren Rohres 28 antriebsverbunden.

Für eine Registrierung und/oder statistische Auswertung der beim Prüfvorgang ermittelten Pedalweg-Meßwerte ist in Fig. 6 eine zusätzliche Auswert-Vorrichtung 30 mittels Leitungen 31 und 32 an die Pedalkraft- und Pedalweg-Meßvorrichtungen 3 bzw. 4 angeschlossen, die sowohl beweglich tragbar ausgebildet als auch Bestandteil einer stationären Prüfstation an Fertigungsbandstraßen sein kann.

Zum Vereinfachen und Erleichtern des Prüfvorganges weisen die Pedalkraft- und Pedalweg-Meßvorrichtungen 3 und 4 sowie das Anzeigeinstrument 10 bzw. 10′ und ggf. die Auswertvorrichtung 30 eine optische und/oder akustische Anzeigefunktion für das Erreichen des für den Prüfvorgang vorbestimmten Pedalkraft-Meßwertes auf. Stattdessen oder zusätzlich können diese Vorrichtungen auch so ausgebildet sein, daß beim Erreichen des vorbestimmten Pedalkraft-Meßwertes der zugehörige Pedalweg-Meßwert in der Anzeige- und/oder Auswertvorrichtung bleibend angezeigt bzw. gespeichert wird.

## Patentansprüche

1. Tragbares Prüfgerät für Fußpedal-Betätigungen, insbesondere für hydraulisch betätigte Kraftfahrzeug-Bremsen, das Abstützstellen zum Fußpedal (2) und zu einem Festpunkt, wie zur Lenkvorrichtung (17) eines Kraftfahrzeuges, eine Pedalkraft-Meßvorrichtung (3) zur Abstützung an der Pedalplatte (5) und eine Pedalweg-Meßvorrichtung (4) aufweist, dadurch gekennzeichnet, daß die Pedalkraft-Meßvorrichtung (3) eine Kraftabstützfläche für die Schuhsohle (6) einer das Fußpedal (2) bedienenden Prüfperson aufweist und daß die Pedalweg-Meßvorrichtung (4) ein stabförmiges starres und/oder teleskopisch längenveränderliches Bauteil aufweist, das sich zwischen einer gelenkigen Halterung (13, 14) zum Fußpedal (2) und einer längenveränderlichen Abstützung zum Festpunkt (Lenkradkranz 16) erstreckt.

2. Prüfgerät nach Anspruch 1, dadurch gekennzeichnet, daß die Pedalweg-Meßvorrichtung (4) ein starres stabförmiges Bauteil aufweist, das sich von der Gelenkverbindung (14) zur Fußpedal-Halterung (13) bis zu einem freien Ende (15) mit - bei betätigtem Fußpedal (2) - größerer Länge als der Abstand zwischen Gelenkverbindung (14) und unterem Bereich des Lenkradkranzes (16) einer Fahrzeug-Lenkvorrichtung (17) erstreckt, das zumindest in einem Bereich seiner Oberfläche, die für dessen loses, gewichtsbedingtes Anliegen an der Innenseite des Lenkradkranzes (16) in dessen unterem Bereich bestimmt ist, eine glatte längsgleitfähige Ausbildung aufweist und das in diesem Bereich seiner Oberfläche einen in seiner Längserstreckung angeordneten Längenmaßstab (18) trägt, der für das Zusammenwirken mit einer Meßmarke (19) am Lenkradkranz (16) ausgebildet ist.

3. Prüfgerät nach Anspruch 1 oder 2, dadurch gekennzeichnet, daß das stabförmige Bauteil längenverstellbar (21, 22) ausgebildet ist.

4. Prüfgerät nach Anspruch 1 oder 2, dadurch gekennzeichnet, daß am stabförmigen Bauteil ein Längenmaßstab (18) längsverschiebbar (19, 20) befestigt ist.

5. Prüfgerät nach Anspruch 3, dadurch gekennzeichnet, daß das gegenüber der Halterung (13) zum Fußpedal (2) längenverstellbare Ende (15) des stabförmigen Bauteiles eine U-förmige, sich zu seiner Öffnung hin keilförmig erweiternde und gelenkig befestigte Aufnahme (15″) für den unteren Bereich des Lenkradkranzes (16) aufweist und daß ein Längenmaßstab (18) sowie mindestens eine zugeordnete Meßmarke (18′) an den relativ zueinander längenverstellbaren Bauteil-Abschnitten angeordnet sind.

6. Prüfgerät nach Anspruch 5, dadurch gekennzeichnet, daß die Pedalweg-Meßvorrichtung (4) einen als handelsüblichen elektronischen Digital-Wegmeßaufnehmer (18′) mit Anzeige-Display und/oder Leitungs-Anschluß (9′) eines getrennten Anzeige-Displays (12) bzw. Auswertgerätes (30) aufweist, dessen Impulsgeber-Strecke (18) an einem Bauteil-Abschnitt (28) befestigt ist und dessen auf der Impulsgeber-Strecke (18)

<div align="center">4</div>

verschiebbar befestigtes Impulsaufnehmer-Gehäuse (18') mit dem anderen Bauteilabschnitt (27) in Mitnahme-Verbindung steht.

7. Prüfgerät nach Anspruch 6, dadurch gekennzeichnet, daß ein gemeinsames Anzeige- und/oder Auswertgerät (10', 30) mit den Pedalkraft- und Pedalweg-Meßvorrichtungen (3, 4) verbunden ist, das je eine Anzeige- und/oder Auswertvorrichtung (12, 30) für beide Meßwerte aufweist.

8. Prüfgerät nach Anspruch 6, dadurch gekennzeichnet, daß die Pedalkraft-Meßvorrichtung (3) mit einer Anzeige- und/oder Auswertvorrichtung (10', 30) leitungsverbunden (9, 31) ist, die eine optische und/oder akustische Signalvorrichtung zur Anzeige eines vorbestimmten Pedalkraft-Meßwertes aufweist.

9. Prüfgerät nach Anspruch 7, dadurch gekennzeichnet, daß die Pedalkraft- und Pedalweg-Meßvorrichtungen (3, 4) mit einer Auswertvorrichtung (30) leitungsverbunden (9, 9', 31, 32) sind, die nach Erreichen eines vorbestimmten Pedalkraft-Meßwertes den zugehörigen Pedalweg-Meßwert anhaltend anzeigt und/oder speichert.

10. Prüfgerät nach Anspruch 1, dadurch gekennzeichnet, daß die Halterung (13) zum Fußpedal (2) und die Pedalkraft-Meßvorrichtung (3) eine Baueinheit bilden, die federnde Halteelemente für die leicht bedienbare und lösbare Befestigung auf der Pedalplatte (5) und außerhalb des Schuhsohlen-Auflagenbereiches die gelenkige Halterung (14) der Pedalweg-Meßvorrichtung (4) aufweist.

11. Prüfgerät nach Anspruch 5, dadurch gekennzeichnet, daß das stabförmige Bauteil der Pedalweg-Meßvorrichtung (4) aus zwei ineinander teleskopisch längsverstellbaren Bauteilabschnitten (27, 28) besteht, deren Längenveränderung die Pedalweg-Meßvorrichtung (4) zugeordnet ist.

12. Prüfgerät nach Anspruch 11, dadurch gekennzeichnet, daß das stabförmige Bauteil mittels dreier ineinander greifender Rohre (26, 27, 28) doppelt teleskopisch längsverstellbar ist, wobei eine Längen-Verstellung (21, 22) auf Fahrzeug-Baumuster gebundene Abstände zwischen Fußpedal (2) und Lenkradkranz (26) ein- und feststellbar ist.

## Claims

1. A portable test device for pedal controls, more particularly for hydraulically-actuated motor vehicle brakes, which is supported at a place on the pedal (2) and at a fixed point such as the driving means (17) of a motor vehicle, and comprises a pedal force meter (3) abutting the pedal plate (5) and also comprises a pedal travel meter (4), characterised in that the pedal force meter (3) has a force abutment surface for the sole (6) of an investigator's shoe operating the pedal (2), and the pedal travel meter (4) has a rod-like, rigid and/or telescopically-extendable component disposed between a jointed mounting (13, 14) on the pedal (2) and a variable-length support at a fixed point (a steering-wheel rim 16).

2. A test device according to claim 1, characterised in that the pedal travel meter (4) comprises a rigid rod-like component which extends from the jointed connection (14) to the pedal mounting (13) up to the free end (15) thereof and, when the pedal (2) is actuated, has a length greater than the distance between the joint connection (14) and the lower region of the wheel rim (16) of a vehicle steering device (17) and, at least in one region of its surface, has a smooth longitudinally-slidable structure so that it can abut loosely and through gravity against the inside of the lower region of the steering-wheel rim (16), and, in the last-mentioned region of its surface, the rod-like member bears a longitudinally-disposed length scale (18) adapted to co-operate with a measuring mark (19) on the steering-wheel rim (16).

3. A test device according to claim 1 or 2, characterised in that the rod-like component is made variable in length (21, 22).

4. A test device according to claim 1 or 2, characterised in that a length scale (18) is secured to the rod-like component so as to be longitudinally movable (19, 20).

5. A test device according to claim 3, characterised in that the end (15) of the rod-like component which is longitudinally adjustable relative to the mounting (13) on the pedal (2) has a U-shaped pivotally-secured recess (15''), widening in a wedge shape towards its opening, for the bottom region of the steering-wheel rim (16), and a length scale (18) and a least one associated measuring mark (18') are disposed on the portions of the component which are longitudinally adjustable relative to one another.

6. A test device according to claim 5, characterised in that the pedal travel meter (4) comprises a commercial electronic digital travel pick-up (18') with a display means and/or a connecting line (9') to a separate display means (12) or evaluating device (30), the pulse-generating section (18) of which is secured to one portion (28) of the component whereas the pulse-generator casing (18') movably secured to the pulse generator section (18) is in driving connection with the other portion (27) of the component.

7. A test device according to claim 6, characterised in that a common display and/or evaluating device (10', 30) is connected to the pedal-force and pedal-travel meters (3, 4) and comprises a respective display and/or evaluating device (12, 30) for both measurements.

8. A test device according to claim 6, characterised in that the pedal-force meter (3) is connected to the display and/or evaluating device (10′, 30) by a line (9, 31) which comprises optical and/or acoustic signal means for displaying a predetermined measured value of the pedal force.

9. A test device according to claim 7, characterised in that the pedal-force and the pedal-travel meters (3, 4) are connected by lines (9, 9′, 31, 32) to an evaluating device (30) which, after a predetermined measured value of the pedal force has been reached, permanently displays and/or stores the associated measurement of pedal travel.

10. A test device according to claim 1, characterised in that the mounting (13) on the pedal (2) combines with the pedal-force meter (3) to form a structural unit which comprises resilent retaining components for easily-operated, releasable attachment to the pedal plate (5) and also comprises the jointed mounting (14) of the pedal-travel meter (4) outside the region where the shoe sole rests.

11. A test device according to claim 5, characterised in that the rod-like component of the pedal-travel meter (4) comprises two portions (27, 28) which can be adjusted in length by telescoping in one another, the length altering under the control of the pedal-travel meter (4).

12. A test device according to claim 11, characterised in that the rod-like component is adjustable in length via three doubly telescopic interlocking tubes (26, 27, 28), the length being adjustable and settable (21, 22) to the distances between the pedal (2) and the steering-wheel rim (26), depending on the model of vehicle.

## Revendications

1. Appareil d'essai portatif pour commandes à pédales, notamment pour freins de véhicules à moteur actionnés hydrauliquement, qui présente des points d'appui sur la pédale (2) et sur un point fixe, tel que le dispositif de conduite (17) d'un véhicule à moteur, un dispositif de mesure de la force appliquée sur la pédale (3) destiné à s'appuyer sur la plaque (5) de pédale et un dispositif de mesure de course de pédale (4), caractérisé en ce que le dispositif de mesure (3) de la force appliquée sur la pédale présente une force d'appui de la force pour la semelle de chaussure (6) d'une personne faisant l'essai qui appuie sur la pédale (2) et que le dispositif de mesure de la course de pédale (4) présente une pièce constitutive en forme de barre rigide et/ou télescopique se modifiant en longueur, qui s'étend entre un support articulé (13, 14) par rapport à la pédale (2) et un appui modifiable en longueur par rapport au point fixe (volant 16).

2. Appareil d'essai selon la revendication 1, caractérisé en ce que le dispositif de mesure (4) de course de pédale présente une pièce constitutive en forme de barre rigide, qui s'étend depuis la liaison articulée (14) pour la fixation à la pédale (13) jusqu'à une extrémité libre (15) avec, quand on actionne la pédale 2, une plus grande longueur que la distance comprise entre ta liaison articulée (14) et la partie inférieure du bord du volant (16) d'un dispositif de conduite (17) de véhicule, qui présente au moins dans un domaine de sa surface, une structure lisse pouvant coulisser en longueur, qu'on prévoit pour qu'elle puisse reposer librement sous l'effet de son poids, sur la face interne du bord du volant (16) dans son domaine inférieur, et qui porte dans ce domaine de sa surface, une échelle de longueur (18) disposée dans son extension longitudinale, réalisée en liaison à un trait de repère (19) sur le bord du volant (16).

3. Appareil d'essai selon la revendication 1 ou 2, caractérisé en ce que la pièce constitutive en forme de barre est réglable (21, 22) en longueur.

4. Appareil d'essai selon la revendication 1 ou 2, caractérisé en ce que sur la pièce constitutive en forme de barre, on fixe une échelle (18) de longueur (19, 20) qui peut coulisser longitudinalement.

5. Appareil d'essai selon la revendication 3, caractérisé en ce que l'extrémité (15) à l'opposé du support (13) sur la pédale (2) réglable en longueur, de la pièce en forme de barre, présente une prise (15″) en U, fixée de manière articulée sur le domaine inférieur du bord du volant (16) et qu'une échelle de longueur (18) ainsi qu'au moins un trait de repère correspondant (18′) sont placés sur des parties de pièces constitutives réglables en longueur l'une par rapport à l'autre.

6. Appareil d'essai selon la revendication 5, caractérisé en ce que le dispositif de mesure de course de pédale (4) présente un capteur (18′) de course numérique électronique du commerce avec un affichage et/ou un cordon de raccord (9′) d'un affichage (12) ou d'un appareil d'exploitation (30) séparé, dont la piste (18) émettrice d'impulsions est fixée à une partie (28) de pièce constitutive et dont un boîtier (18′) capteur d'impulsions peut se déplacer sur la piste (18) émettrice d'impulsions et est en liaison d'entraînement avec l'autre partie de pièce constitutive (27).

7. Appareil d'essai selon la revendication 6, caractérisé en ce qu'on relie un appareil commun d'affichage et/ou d'exploitation (10′, 30) aux dispositifs de mesure (3, 4) de force exercée sur la pédale et de course de pédale, et qu'il présente pour chacun un dispositif d'affichage et/ou d'exploitation (12, 30) pour les deux valeurs mesurées.

8. Appareil d'essai selon la revendication 6, caractérisé en ce qu'on relie le dispositif (3) de mesure de force exercée sur la pédale à un dispositif d'affichage et/ou d'exploitation (10', 30) par des câbles (9, 31), qu'il présente un dispositif de signalisation optique et/ou acoustique pour indiquer qu'on atteint une valeur de mesure de force exercée sur la pédale définie au préalable.

9. Appareil d'essai selon la revendication 7, caractérisé en ce qu'on relie les dispositifs (3, 4) de mesure de force exercée sur la pédale et de course de pédale, à un dispositif d'exploitation (30) par des câbles (9, 9', 31, 32), qui, après avoir atteint une valeur prédéterminée de force exercée, affiche et/ou enregistre en continu, la valeur de course de pédale.

10. Appareil d'essai selon la revendication 1, caractérisé en ce que la fixation (13) à la pédale (2) et le dispositif (3) de mesure de la force exercée sur ta pédale, forment une unité constitutive qui présente les éléments de maintien élastiques pour ta fixation facile à manipuler et à démonter sur la plaque (5) de pédale et en dehors de la zone d'appui de la semelle de chaussure, le support articulé (14) du dispositif de mesure (4) de course de pédale.

11. Appareil d'essai selon la revendication 5, caractérisé en ce que la pièce constitutive en forme de barre du dispositif (4) de mesure de course de pédale comprend deux parties de pièces constitutives (27, 28), réglables en longueur télescopiquement, dont la modification de longueur est transmise au dispositif (4) de mesure de course de pédale.

12. Appareil d'essai selon la revendication 11, caractérisé en ce que la pièce constitutive en forme de barre est réglable en longueur au moyen de trois tubes en prise l'un dans l'autre (26, 27, 28) doublement télescopiques, en pouvant régler et fixer un réglage de longueur (21, 22) ajustée aux écarts existants sur les prototypes de véhicules entre la pédale (2) et le bord de volant (16).

FIG. 2

FIG. 1

FIG. 3

EP 0 320 666 B1

FIG. 4

FIG. 5

9

FIG. 6